# EUROPEAN PATENT SPECIFICATION

(11) **EP 0 512 177 B1**
(45) Date of publication and mention of the grant of the patent: **16.07.1997**
(21) Application number: 91308542.9
(22) Date of filing: 19.09.1991
(51) Int. Cl.: B02C 18/40

(54) **Rotary screen diverter and solid waste handling system**
Umlenkeinheit mit umlaufendem Sieb und Bearbeitungssystem für festen Abfall
Déflecteur avec un tamis rotatif et système pour traiter des déchets solides

(30) Priority: 06.05.1991 US 696409
(43) Date of publication of application: 11.11.1992
(73) Proprietor: Chambers, Boyd & Associates, Santa Ana, CA 92707 (US)
(72) Inventor: Chambers, Joseph W., Sr., Rancho Mirage, California 92270 (US); Fennessy, Craig J., Huntington Beach, California 92646 (US)
(74) Representative: Skone James, Robert Edmund

(56) References cited:
- US-A- 4 046 324
- US-A- 4 919 346

## Description

This invention relates to solid waste handling systems of the type employing a solid waste grinder for shredding, crushing and grinding solid waste material carried by a liquid influent, and more particularly to a rotary screen diverter which collects and diverts solid waste within the influent stream into the inlet of the grinder.

A highly effective, solid waste grinder has been developed in recent years for shredding, crushing and grinding solid waste material carried by a liquid influent stream in which two interacting stacks of shredding members are mounted on substantially parallel vertical shafts, positioned in transverse arrangement relative to the direction of waste material introduction into a grinder or comminutor apparatus. The shredding members of one stack interact with the shredding members of the other stack, with the rotating shredding members of respective stacks being separated by spacers, wherein the distances between the teeth of a cutting element with an opposing spacer differ as between different ones of pairs of interacting shredding members and wherein teeth are provided on at least one member of each pair of shredding members for cutting in both directions of stack rotation. U.S. Patent 4,046,324, assigned to the common corporate assignee, is exemplary of such solid waste shredding, crushing and grinding apparatus.

While such shredding, crushing and grinding apparatus works very effectively and permits the fine solids ground during flow passage of the influent stream through the apparatus to be retained within the liquid, where large flows are required, there is a necessity to stack a relatively large number of such apparatuses side by side, that the influent flow rate is not severely diminished by the presence of the solid waste grinding apparatus. Additionally, since the grinding apparatus is required to see only the major portion of the solid waste carried by the influent, there is a need in the industry to effectively concentrate within the portion of the liquid influent passing through the grinding apparatus, the solid waste carried by the influent.

Another waste handling system is described in US-A-4919346.

In accordance with the present invention a waste handling system for screening and grinding solids entrained in an influent liquid stream flowing within a flow confining chute comprises a solid waste grinder unit; a solids diverter horizontal rotating screen unit fixedly mounted within the chute, said screen unit comprising a rigid fixed frame assembly, a screen mounted for rotation on said frame assembly such that one face of the screen may be positioned for movement horizontally across the stream and facing upstream thereof, and means mounted on the rigid frame assembly for rotating said screen thereby diverting a portion of the stream flow in the direction of screen movement to cause solid waste of the influent stream larger than openings in the screen to be entrained in influent diverted along said one upstream face and to be carried thereby in the direction of screen movement such that the solid waste is driven to the grinder unit and finely ground prior to discharge from the grinder unit and is characterized in that the system further comprises a flow deflector positioned inside the screen unit relative to the means for rotating the screen, the flow deflector diverting fluid flow from a back inside of the screen through the screen to dislodge materials on an outside of the screen toward the grinder unit. The present invention provides an improved waste handling system using one or more solid waste grinder units positioned in the path of an influent stream carrying the solid waste, in which the solid waste is effectively concentrated and moves with minimum effort into the inlet of the grinding apparatus, wherein the grinder units involve stacked interacting shredding members, wherein a solid waste diversion mechanism is employed, which is of simplified construction, which is readily operatable for various width influent streams and wherein, the solids diversion mechanism is of a type, which concentrates the solids and diverts the influent upstream of a grinder unit or units and which facilitates the introduction of the concentrated solids into the inlet of such grinder unit.

Typically, the chute has a bottom wall and laterally spaced vertical sidewalls defining a flow channel for the stream, at least one solids diverter horizontal rotating screen unit and a downstream offset grinder unit at an end thereof being provided and having an inlet port facing upstream to receive solids entrained by the endless loop open mesh screen. The solids diverter horizontal rotating screen unit is fixedly mounted within the chute and may have one end proximate to the one sidewall and extending towards the other sidewall at an angle to the flow direction of the stream while the grinder unit to the side remote from the screen unit is fixed to the other sidewall of the chute.

Preferably, an open frame support assembly is fixedly mounted between the sidewalls of the chute and fixedly mounts the upper portions of the screen unit and the grinder unit. Preferably, the grinder unit has a housing with an upstream facing inlet port and a downstream facing outlet port and mounts internally within the housing, stacked interengaging shredding members mounted for rotation about their axes in the path of flow of the solids bearing influent through the housing from the inlet port to the outlet port. Motors mounted to the screen and grinder units rotate, respectively the endless loop screen and the interengaging shredding members thereof.

The solid waste handling system may have a single screen unit at right angles or oblique to the influent stream and a single grinder unit offset thereof and at one end of the screen unit. Alternatively, multiple screen units may form a stacked array, in end overlapping position, with one or more grinder units downstream of the most downstream screen unit of the array. The screen unit may have an open frame assembly in the form of left and right vertically spaced upper and lower end housings supporting respective ends of vertically oriented drive and driven shafts mounted for rotation about their axes. A plurality of sprockets may be fixedly mounted on the shafts at axially spaced positions along the shafts for rotation about their axes with the sprockets including radially projecting teeth. The endless loop open mesh screen may comprise linked rounded screen sections with each screen section being formed of a plurality of horizontal, vertically spaced links, horizontally spaced riser strips integral with the links to define with the links rectangular screen mesh openings. The headed end of horizontal links of adjacent screen sections are interposed with each other with holes thereof aligned and rods projecting through the aligned holes to pivotably couple the links together at the headed ends such that the pivotably coupled screen sections wrap about the sprockets mounted to the drive and driven shafts. A stacked assembly of a speed reducer and a drive motor in that order may be mounted to the upper end housings of the screen unit mounting the drive shaft with a pair of shaft couplers interposed, respectively between the drive motor and the speed reducer for completing a speed reduction drive coupling between an output shaft of the motor and the screen unit drive shaft. The screen unit open frame assembly further includes an upper tensioner operatively coupled between the upper end housings for the drive shaft and driven shaft, respectively and a lower tensioner operatively coupling the lower end housings for rotatably mounting the drive shaft and driven shafts to effect selective adjustment of the tension of the endless loop section rotatably mounted on sprockets fixed to respective shafts. A secondary tensioner may be interposed between the upper and lower tensioners and the driven shaft assembly including said upper and lower end housings for that shaft. The secondary tensioner includes secondary tensioner adjusting means in juxtaposition to the upper end housing rotatably mounting the driven shaft for permitting adjustment of the screen tension after the screen unit is mounted within the chute.

An example of a waste handling system according to the invention will now be described and contrasted with comparative examples, with reference to the accompanying drawings, in which:-
Figure 1 is a perspective view of the improved solid waste handling system utilizing a solids diverter horizontal-rotating screen unit for diverting solids within an influent stream into an open inlet of a grinding unit utilizing interengaging stacks of shredding members positioned to the side and downstream of the rotating screen diverter unit and forming a first comparative embodiment;
Figure 1A is a top plan view of the system of Figure 1;
Figure 2 is a front elevational view of the horizontal rotating solids diverter screen unit employed in the apparatus of Figure 1;
Figure 3 is a transverse sectional view of the horizontal rotating, solids diverter screen unit taken about line III-III of Figure 2;
Figure 4 is a side elevational view, partially broken away of the solids diverter horizontal rotating screen unit of Figures 2 and 3;
Figure 5 is a front elevational view, partially in section of the grinder unit forming a principal component of the solid waste handling system illustrated in Figure 1;
Figure 6 is a top plan view of a solid waste handling system forming a second comparative embodiment;
Figure 7 is a top plan view of a solid waste handling system forming yet another comparative embodiment;
Figure 8 is a top plan view of a solid waste handling system forming yet a further comparative embodiment;
Figure 9, is a top plan view of a solid waste handling system according to an embodiment of the present invention; and,
Figures 10A and 10B are plan views of the embodiment of Figure 9 illustrating different positions of the components.

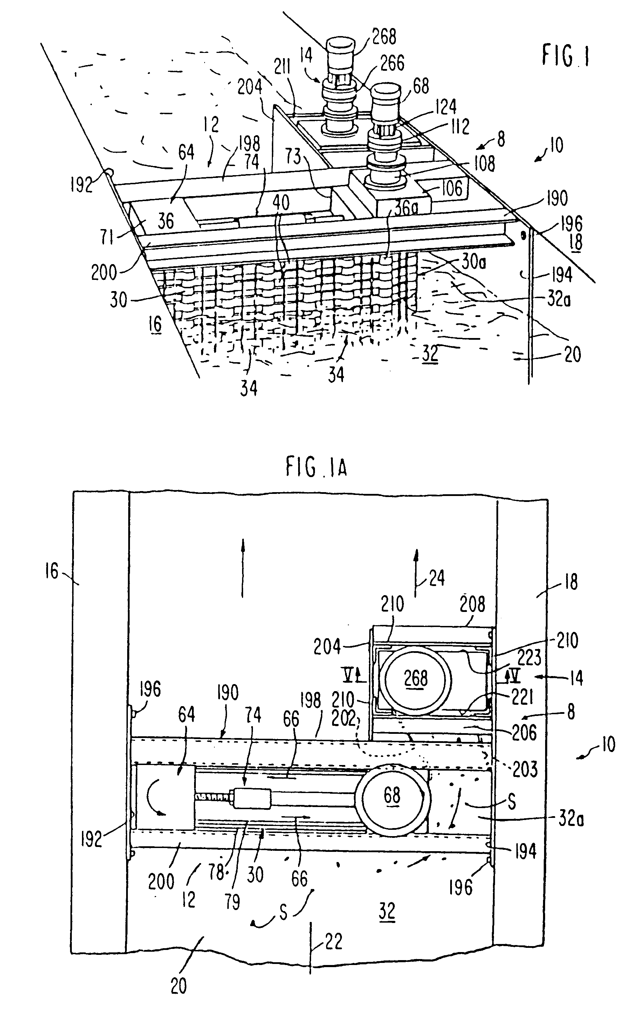

Referring to Figures 1-5 inclusive, a solid waste handling system forming a first comparative example of the invention is illustrated generally at 10 and consists of a integrated assembly 8 of a solids diverter horizontal rotating screen unit indicated generally at 12 and a grinder unit indicated generally at 14, mounted within and spanning laterally between opposed vertical sidewalls 16, 18 of a chute or spillway indicated generally at 20. Chute 20 defines a flow channel 32 for a solids influent stream indicated generally by arrow 22, upstream of the assembly 8, with a waste stream or effluent exiting from grinder unit 14, as indicated generally by arrow 24, on the downstream side of the channel defined by the chute or spillway 20.

Grinder unit 14 may be of the type of apparatus illustrated in U.S. Patent 4,046,324 and sold by the corporate assignee of this application under the registered Trademark MUFFIN MONSTER. The makeup of the grinder unit 14 may be seen by reference to U.S. Patent 4,046,324 and by reference to Figure 5 which is a partial vertical sectional view of unit 14 of Figure 1.

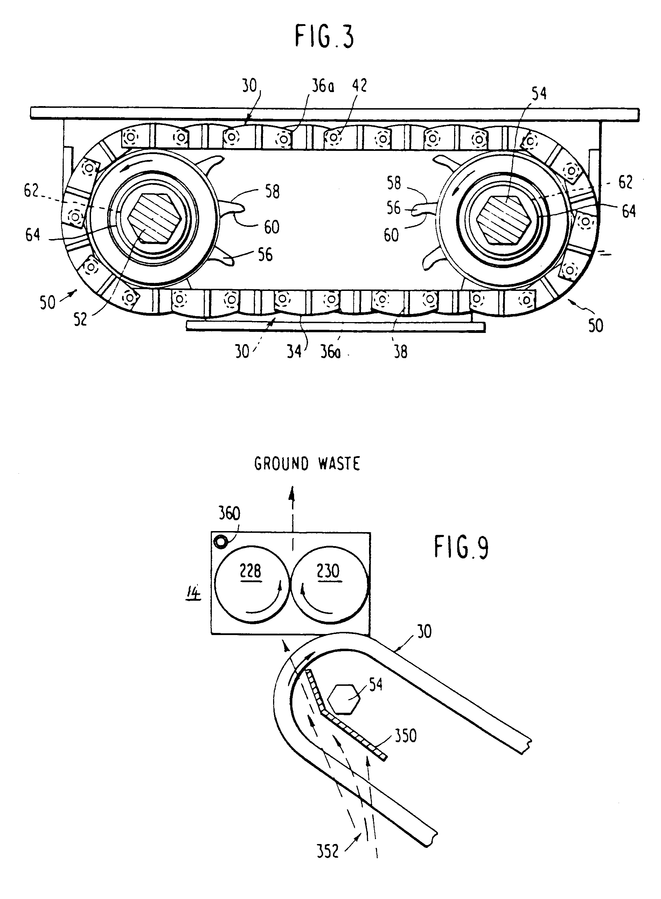

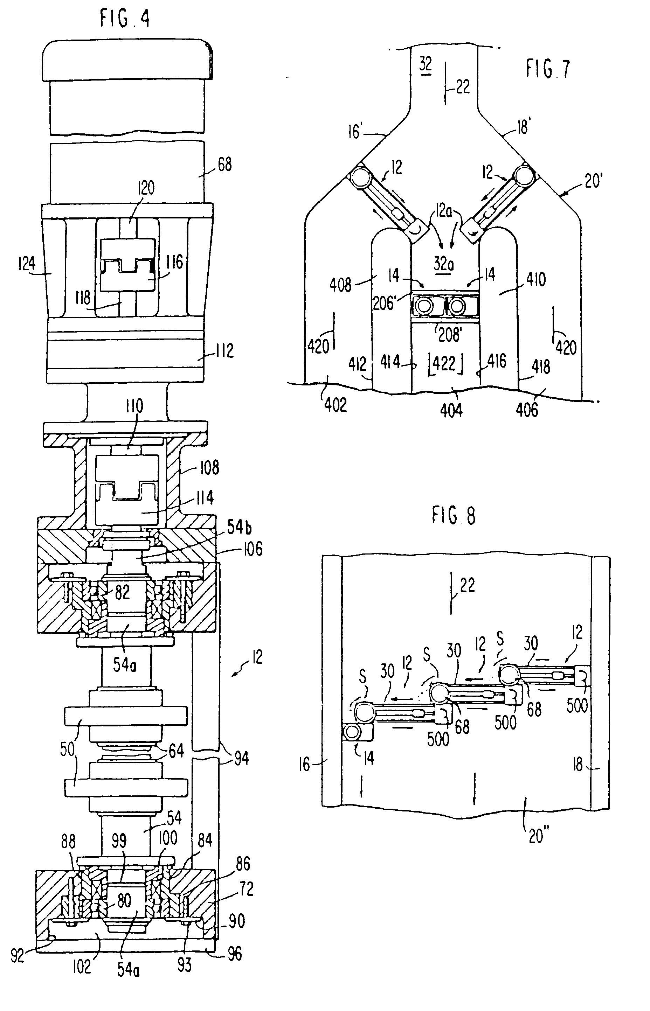

The solids diverter horizontal rotating screen unit 12 in the embodiment of Figures 1-5, includes an endless loop open mesh screen indicated generally at 30 having an upstream length which moves, in this embodiment, at right angles to the direction of the solids influent stream 22. As will be explained herein, the screen may also be angled to the fluid flow. The screen unit 12 is positioned such that one end is in proximity to the vertical sidewall 16 of the chute or spillway 20, while the opposite end stops short of the chute or spillway sidewall 18, so as to form a narrow flow channel section 32a between the end of screen 30 and the adjacent sidewall 18. Screen 30 may be made up of a number of overlapping linked screen sections 34 consisting of vertically spaced, horizontal links 36 having headed ends 36a, integrally joined by a pair of vertical riser strips 38, so as to form a mesh having rectangular openings 40 defined by the links 36 and the riser strips 38 as well as by the headed ends 36a of stacked links. The headed ends of one screen section 34 are interposed between headed ends 36a of adjacent screen sections at opposite ends. Vertical rods 42 project through aligned holes 44 of the links 36. As best seen in Figure 3, the outer face of the screen section 34 is rounded (convex) between the links 36. This shape facilitates the removal of material from the front of the screen as it rotates about the ends. Given the outward radius the gap between the screen surface and the cutters is minimized. The endless screen 30 is physically supported by a series of identically formed sprockets indicated generally at 50 which are fixedly mounted to both a vertical driven shaft 52 and a vertical drive shaft 54 at opposite left and right ends of the solids diverter horizontal rotating screen unit 12. The shafts 52, 54 have hexagonal cross sections mated in hexagonal holes 55 within the center of sprockets 50 to insure positive drive between the rotating shafts and the various sprockets 50 mounted thereon. There may be, for instance, five sprockets 50 on each of the shafts 52. Idling or take up sprockets 50 on shaft 52 are identical to driving sprockets 50 on drive shaft 54. However, the idling or take up sprockets have teeth 56 which face in the opposite direction to those of the drive sprockets 50 fixed to the drive shaft 54. The teeth 56 include a near radial edge 58 on one side and a concave edge 60 on the opposite side; the concave edge 60 acting to contact the links 36. In each instance, however, the endless screen 30 drives the sprockets 50 fixed to the driven shaft 52 while, the teeth 56 of the sprockets 50 fixed to the drive shaft 54 function to drive the endless screen 30 by contacting the headed ends 36a of respective lengths via teeth concave edges 60 which face in the direction of rotation. In order to lock the various idling or take up sprockets and the various driving sprockets axially at defined positions to driven shaft 52 and drive shaft 54, respectively, these shafts have grooves 62 within their peripheries at longitudinal spaced positions. Grooves 62 receive snap rings 64 to physically locate the sprockets 50 at equally spaced positions along the lengths of the respective shafts 52, 54. As seen in Figures 1 and 4, the sprocket arrangement is commercially available.

Screen 30 may take forms other than those embodiments described and sprockets 50 on driven shaft 52 may be replaced by roller idlers. It is noted that the screen 30 should have a curved radiused face to present a substantially smooth surface as the screen rotates on sprockets 50. This permits the debris to be swept off by the fluid flow without being caught by a sharp surface or edge. It also minimizes the gap between screen and cutter blade for more efficient removal of material off the screen surface.

As may be appreciated by reference to Figures 1-5 inclusive, the solids diverter horizontal rotating screen unit 12, is a unitary structural assembly including an elongated frame indicated generally at 64, supporting the endless screen 30 for rotation in the direction of arrow 66 and topped by a drive motor 68 at one end thereof. Motor 68 is coupled to the drive shaft 54 at the end of the unit 12 proximate to grinder 14. The frame 64 includes left and right lower end housings 70, 72, and left and right upper end housing 71, 73, respectively, linked at the top and bottom by adjustable mechanical links indicated generally at 74, 76 the purpose of which is to put proper tension on screen 30 and maintain it during operation.

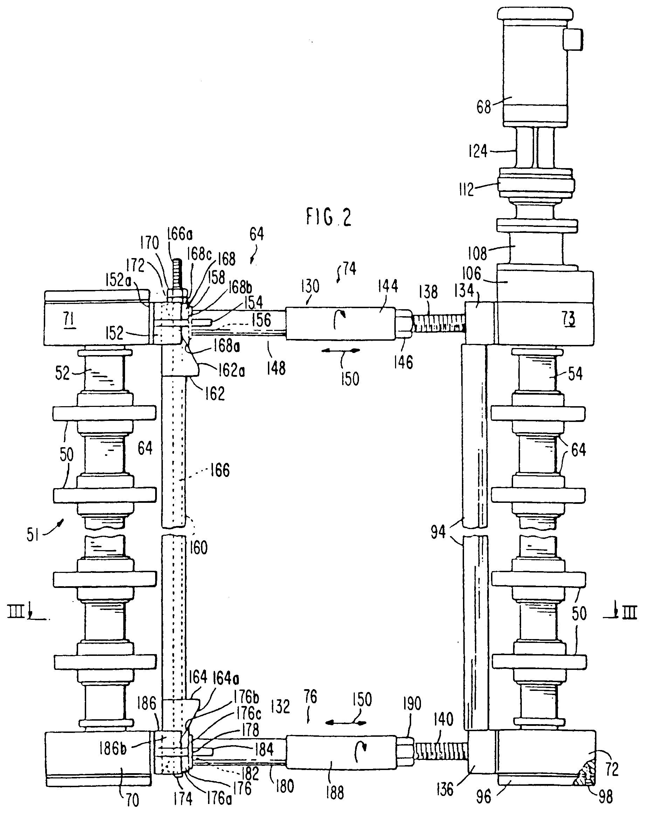

The solids S within the influent stream 22 tend to follow the laminar flow of diverted influent caused by transverse movement of the upstream face 78 of the upstream length of screen 30, and while most of the influent 22 liquid passes therethrough, the solids S larger than the screen openings are carried along the upstream face 78 of the screen, and are automatically swept from the curved end 30a of screen 30 at the narrow channel section 32a leading to the grinder unit 14, Figure 1. The end housings 70, 71, 72, 73 are essentially metal blocks of rectangular form, which mount respective ends of the drive and driven shafts 54, 52. Those shaft ends may be of circular cross section and of reduced diameter, for instance shaft ends 54a for drive shaft 54, Figure 4, are appropriately mounted by anti-friction bearings 80, 82. Similar anti-friction bearings are provided as at 83 for the driven shaft 52, Figure 1. The sectional view, Figure 4, shows the lower end housing 72 having a bore 84 and a first counterbore 86, within which is positioned an annular seal assembly 88. Further, an annular ring 90 is bolted to end housing 72 at a further counterbore 92 which receives ring 90. Screws 93 fix the annular ring 90 onto the recessed bottom of end housing 72. Access thereto is covered by the bottom cover 96 via a series of screws 98. The inner periphery of ring 90 underlies the outer race of anti-friction. bearing 80 to maintain the lower reduced diameter end 54a of the drive shaft 54 mounted for rotation about its vertical axis within lower end housing 72. The right hand end housings 72, 73 are fixedly joined, Figure 4, by a vertical frame member or bar 94. To effectively seal the lower end of the drive shaft 54, the drive shaft section 54a is provided with a circumferential groove receiving an O-ring 99 which acts in conjunction with seals 100 for sealing cavity 102 of end housing 72 interiorly of cover 96. Further, a gasket (Figure 2) may be provided on the inside face of the cover 96 and between the cover and the lower end housing 72.

The structural arrangement is a near duplicate for the upper end of the drive shaft 54, however, the drive shaft 54 at that end is extended by a first reduced diameter portion 54a, and by a second further reduced diameter portion 54b which projects through the center of upper cover 106 which overlies the upper end housing 73, at that end of the screen unit 12. As seen in Figure 4, a flanged cylindrical housing 108 is fixedly mounted to cover 106. Housing 108 carries interiorly a shaft coupling 114 connecting the reduced diameter portion 54a of the drive shaft 54, and a further axially aligned output shaft 110 of a speed reducer indicated generally at 112 which is fixed to the upper end of housing 108. Coupling 114 may be a model L090 commercial coupling, sold under the trademark LOVE JOY. A second LOVE JOY model L090 coupling 116 couples the speed reducer input shaft 118 to a motor shaft 120 which projects downwardly from drive motor 68. Motor 68 is, in turn, fixedly mounted coaxially above the speed reducer 112, via a further flanged, open housing 124. The speed reducer 112 effectively reduces the RPM of the motor shaft 120 to an acceptable speed for rotating drive shaft 54 and moving the screen 30 slowly, so that the solids S of a size larger than the mesh openings or holes 40 within the endless screen 30, are maintained within the laminar flow of influent along the upstream vertical face 78 thereof. The solids traverse the screen unit 12 to the point where, an accelerated portion of a solids influent stream 22 diverted by screen 30 flows into the narrow channel portion 32a between the right hand end of the screen unit 12 and sidewall 18 of the chute 20. In accelerating past the screen, the influent stream carries the solids S in particle form and projects them into the inlet port of grinder unit 14. Insofar as driven shaft 52 is concerned, the sprockets 50 thereon function as idler sprockets and it is the rotation of the endless screen 30 which drives the driven shaft 52 in a counterclockwise direction, Figure 1.

Driven shaft sprocket assembly 51, comprising driven shaft 52 and a series of sprockets 50 about which endless screen 30 wraps, is physically coupled to drive shaft sprocket assembly 53, similarly formed by drive shaft 54 and sprockets 50, by the upper and lower mechanical links 74, 76, respectively, including upper and lower primary tensioners 130 and 132. In that respect, the vertical frame member or bar 94, Figure 2, is fixed at its upper and lower ends to the drive end housings 72, 73 by flanges 134, 136 from which project threaded shafts 138, 140, respectively. The upper primary tensioner 130 comprises an internally threaded, hollow sleeve 144 which threadably receives the end of the threaded rod 138. Threaded rod 138 bears a locknut 146. By rotating sleeve 144 which rotatably mounts extension rod 148, coaxial therewith, the sleeve 144 is caused to shift axially in the direction the of the double headed arrow 150 in a direction determined by whether sleeve 144 is rotated clockwise or counterclockwise about its axis. A pair of right angle brackets 152, fixed to the upper, left end housing 71, are of L-shaped configuration having their bases 152a flush with the side of the end housing 71. Further projecting outwardly from the base 152a are paired circular bars or studs 154 which slidably pass through holes 156 within a plate 158 which is welded to the end of extension rod 148. Further, a U-shaped channel bar 160 extends vertically parallel to the driven shaft 52, and has upper and lower wedges 162, 164, fixed respectively to opposite ends thereof. Wedge 162 is narrower than the bracket 152 within which the wedge 162 is positioned, with an oblique face 162a of wedge 162 facing away from end housing 71. Further, a metal rod 166 of a length in excess of the length of channel bar 160 extends the length of the channel bar 160 and is positioned internally, with a slot or bore of the same and has ends passing through narrow slots within wedges 162, 164. Slidably mounted on the oblique face 162a of wedge 162 is a sliding block indicated generally at 168 having a contacting oblique face 168a which matches an oblique face 162a of wedge 162. Further, the sliding block 168 is of a corresponding width to the wedge 162 and is positioned between projecting rods 154. Block 168 also has a vertical face 168b which lies flush to plate 158. The upper end of the rod 166 is threaded and threadably carries, in order, an adjusting nut 170 and a locknut 172, with adjustment nut 170 abutting a flat, horizontal face 168c of sliding block 168.

At the lower end of the threaded rod 166 and in conjunction with left end housing 70, a duplicate assembly is provided including wedge 164. The rod 166, at its lower end, need not be threaded and has a right angle bar 174 welded at its center to the end of the rod, so that bar 174 underlies a horizontal bottom face 176a of a sliding block indicated generally at 176. Block 176 includes an oblique upper face 176b which abuts a similarly angled oblique face 164a of wedge 164. The sliding block 176 includes a vertical face 176c which abuts a plate 178 welded to the end of an extension rod 180 of the lower primary tensioner 132. Further, the plate 178 is apertured at both sides at 182 to receive the projecting ends of studs or bars 184 which project outwardly from base 186 of a pair of respective L-shaped brackets 186 whose side plates 186b contact respective sides of lower wedge 164 and sliding block 176 of the lower primary tensioner 132. The lower primary tensioner 132 includes a sleeve 188 which rotates about its axis relative to connecting rod 180 at one end and which is internally threaded at its opposite end to the end of the threaded rod 140 which projects from and is fixed at its other end to lower drive end housing 73. Threaded rod 140 bears a locknut 190, so that the position of the sleeve 188 on threaded shaft 140 can be fixed via locknut 190, once the lower primary tensioner 132 is adjusted to initially fix the position of the driven shaft sprocket assembly 51 relative to the drive shaft sprocket assembly 53. The rod 166 which is threaded at its upper end, as at 166a, is effective to maintain coupling between the upper sliding block 168 and the lower sliding block 176 in contact with respective wedges 162, 164, and at the same time maintaining an effective coupling via studs 154, 184 and the plates 158, 178 fixed to connecting rods 148, 180 of respective primary tensioners 130, 132, between drive shaft sprocket assembly 53 and driven shaft sprocket assembly 51. After primary tension is set up in the endless screen 30 through the two primary tensioners 130, 132, the locknut 172 is loosened and the adjustment nut 168 tightened down the effect of which is to drive wedges 162, 164 to the left, Figure 2, along with the balance of the driven shaft sprocket assembly 51 to finalize the tension within endless screen 30. Preferably, the primary tensioners 130, 132 are set before the screen unit 12 is lowered into the channel 32 of the chute or spillway 20, while the single secondary tensioner 151, comprising principally sliding blocks 168, 176 and rod 166, is used for further adjustment of the screen tension, after the solid waste treatment system 10 and in particular, the horizontal rotating solids diverter screen unit 12 is installed within the channel 32. It is noted, that secondary tension of screen 30 and final adjustment thereof, may be effected by ready access to the threaded upper end 166a of rod 166, with this end of the rod projecting above the level of the influent stream 22 entering the channel 32 within which the unit 12 is mounted. The secondary tensioner may be eliminated if desired and tension in the screen 30 preset prior to mounting the screen unit 12.

In order to effect the mounting of screen unit 12 as well as the grinder unit 14 with the vertical screen 30 moving horizontally across and at right angles to the direction of flow of the solids influent 22, an open frame is required for mounting these two elements of the assembly 8.

Since the solids diverter horizontal rotating screen unit 12 constitutes a unitary structure and separate subassembly from that of grinder unit 14, it is useful to have an open frame assembly 190 physically embrace the upper end housings 71, 73 of screen unit 12 and a similar upper end housing of grinder unit 14 and that the lateral distance between sidewalls 16, 18 of the chute or spillway 20 be slightly in excess of the overall length of the unit 12. As shown in Figure 1, frame assembly 190 comprises laterally spaced metal mounting plates 192, 194 fixed to the chute or spillway sidewalls 16, 18 by lag screws or the like at 196. Fixedly mounted and joined at opposite ends to plates 192, 194 are a downstream frame member 198 and an upstream frame member 200. Members 198, 200 may be L-shaped angle bars or U-shaped channel bars. The distance between channel bars 198 and 200 is equal to the width of screen unit end housings 71, 73, so that the end housings 71, 73 snugly fit between these two members.

It is preferred that the solid waste treatment assembly 8 include some means such as an oblique baffle plate or wall 202 positioned vertically, at an oblique angle to the diverted influent stream and having an upstream vertical edge connected to the downstream edge of respective drive shaft end housings 72, 73 at the right end of screen unit 12 and its downstream edge coupled to an angle bar 210 to one side of inlet port 221 of grinder unit 14, so as to baffle the flow of influent 22 with the solids S towards the upstream inlet port 221 of the grinder unit 14 as described hereinafter. A generally parallel baffle plate 203 may be placed vertically with its upstream edge contacting chute side wall 18 and its downstream edge contacting the upstream angle bar 210 proximate to sidewall 18 to control the flow of solids into inlet port 221.

Appropriately, a flat vertical sheet metal wall or plate 204 extends vertically upwardly from the bottom wall of the chute or spillway 20, is fixed at one end to the short length angle bar 206, and is fixed at its opposite end to angle bar 208 which spans between plate 204 and plate 194 being appropriately welded or otherwise mechanically fixed thereto by means of bolts, rivets, etc.

In all, four right angle L-shaped cross section angle bars 210 extend vertically downwardly from respective plates 204, 194 to the bottom wall of the chute, defining a rectangular open frame enclosure 211 for grinder unit 14 of the waste treatment system. Further, this portion of the open frame assembly 190 does not hamper the flow of solids influent 22 and indeed facilitates the acceleration of a portion of the influent 22 flow stream as its sweeps through the narrow vertical channel portion 32a between plate 194 and sidewall 18, and the end 30a of the endless screen 30 wrapped under tension about the sprockets 50 of the drive shaft 54 of screen unit 12.

Preferably, metal bars or supporting ways 79 are fixedly mounted at opposite ends to vertical frame members or bars 94, 160 at vertically spaced positions and extend horizontally behind the upstream length of screen for supporting the front half of the screen loop as it is driven by drive shaft 54.

The makeup and nature of operation of the grinder unit 14 may be seen by reference to Figure 5 which is a vertical sectional view of the grinder taken about line V-V of Figure 1 as well as from the content of U.S. Patent 4,046,324, whose content is incorporated herein by reference.

The grinder unit 14 consists of a vertically stacked assembly corresponding in general to that of the stacked drive shaft sprocket assembly 53, with the exception that a drive shaft 228 of unit 14, Figure 5, rotates a first set of shredding members fixed to the shaft 228, which shaft is in line with and coupled to a drive motor 268, while a second drive shaft 230, parallel thereto is mounted for rotation about its vertical axis and is geared to the first drive shaft and which fixedly mounts further interengaging shredding members.

Specifically, the grinder unit 14 comprises a lower end housing 220 of cast or machined metal which is coupled via a pair of oppositely disposed, laterally spaced side rails 222 via screws 224, at upper and lower ends thereof, to an upper end housing 226. The upstream and downstream faces of unit 14 between the upper and lower end housings 226, 220 are open and define, respectively an inlet port 221 and an outlet port 223 to permit the influent 22 bearing the solids S to pass through the grinder unit 14. In that respect, additionally, the interiors of the hollow end housings are sealed from the shredding area, indicated generally at 236 between laterally spaced side rails 222, by upper and lower seal assemblies 238 and 240 for respective shafts 228, 230. A bottom cover 242 underlies the lower end of the lower end housing 222 and is coupled thereto by screws 244. Similarly, a top cover 246 is fixedly mounted to the upper end housing 226 via screws 248 and is provided with a circular opening or hole 250 through which a reduced diameter section 228a of drive shaft 228 passes.

Mounted to the top cover 246 is a cylindrical spool 260, within which is housed a first shaft coupler 262 which couples the reduced diameter portion 228a of shaft 228 to an output shaft 264 of a speed reducer 266 coaxial with the first shaft coupler 262. The speed reducer 266 functions to reduce the speed of a drive motor 268 which tops the assembly and which is physically mounted to an open frame 270 interposed between motor 268 and speed reducer 266 and coaxial therewith. Coupling between the motor 268 and the speed reducer 266 is effected by a second shaft coupler 272 which connects at its upper end to the motor shaft 274 and at its lower end to input shaft 276 of the speed reducer.

Each of the shafts 228, 230 support, in alternately stacked fashion, radially enlarged cutting elements 280 and smaller diameter spacers 282, the cutting elements being of disc form and having radially projecting cutting teeth. The cutting elements 280 are of laminar form, generally of equal thickness to those of the laminar form spacers 282. A laminar spacer of one shaft 228 is coplanar with a cutting element on the other shaft 230 with the cutting element of one stack and the spacer of the other stack together forming a pair of interactive shredding members. The solids S within the flow stream 22 passing in the direction of the arrows and carried by the liquid influent, are shredded to a fine degree by the rotating, stacked, interacting shredding members on respective shafts 228, 230. The fine solid particles exit from the downstream outlet port 223 of the grinder unit 14 as a waste stream effluent 24 characterized by very fine solids particle content. It is preferable that the rotational velocity of the cutter elements be greater than that of the screen. The cutter, moving at a higher tangential speed acts as a "picker" to remove waste on the screen by pulling it off as contact is made with the waste.

In maintaining the assembly of stacked cutting elements 280 and spacers 282 on respective shafts, the shafts are provided with circular discs 284 which abut respective upper bearing assemblies 232, while washers 286 at the lower end of respective shafts 228, 230 clamp against the lower bearing assemblies 234. Further, the respective shafts 228, 230 have reduced diameter externally threaded lower ends 228b, 230b which ends carry locknuts 290 which by axial adjustment, cause a desired compressive force to be exerted on the stacked cutting elements 280 and spacers 282 of respective shafts.

In operation, upon energization of respective motors 68 of the screen unit, and 268 of the grinder unit, solids reaching the upstream face 78 of the rotating endless screen 30 of a size in excess of the mesh of that screen, are carried by diverted influent along on the screen 30 as it revolves clockwise, Figure 1, with a significant portion of the liquid influent stream 22 passing through the perforated screen. However, since the grinder unit 14 is offset downstream in the direction of influent flow 22 and since the end of the screen unit 12 is spaced a short distance from sidewall 18, the flow stream is accelerated as it passes by the right hand lateral edge of the unit 14 and enters narrow channel portion 32a, automatically diverting the solids S away from the screen as the screen 30 wraps about the sprockets 50 mounted to screen unit drive shaft 54. The diverted influent 22 with the heavy concentration of solids S passes via narrow channel portion 32a into the inlet port 221 of the grinder unit 14 where the solids are rapidly and effectively ground into fine particles during passage through the stacks of shredders carried by respective shafts 228, 230. The grinder unit 14 discharges a stream of waste effluent indicated by arrow 24, in Figure 1, through the outlet port 223 of unit 14 .

It is apparent from the description to this extent, that the grinder unit 14 and the screen unit 12 make an effective structural assembly 8 with the offsetting of the screen unit 12 and the grinder unit 14 being such that there is an acceleration of the flow stream around the end of the screen to self divert the solids S away from screen end 30a into the inlet port of the grinder unit 14. Further, with the solids S, upon being ground up, placed back into the waste stream, this eliminates the necessity of the prior practice of physically removing the solids for separate processing, principally effected by vertical rakes which clean off the solids by raising them from the flow stream above the level of that stream and into a further transport system above the level of a fixed vertical screen, normally comprised of vertically oriented bars in laterally spaced, parallel position. Significant economies result from the structural combination of the horizontal rotating screen unit 12 and the grinder unit 14 in the manner of the illustrated embodiment, Figure 1, and the other embodiments described hereinafter.

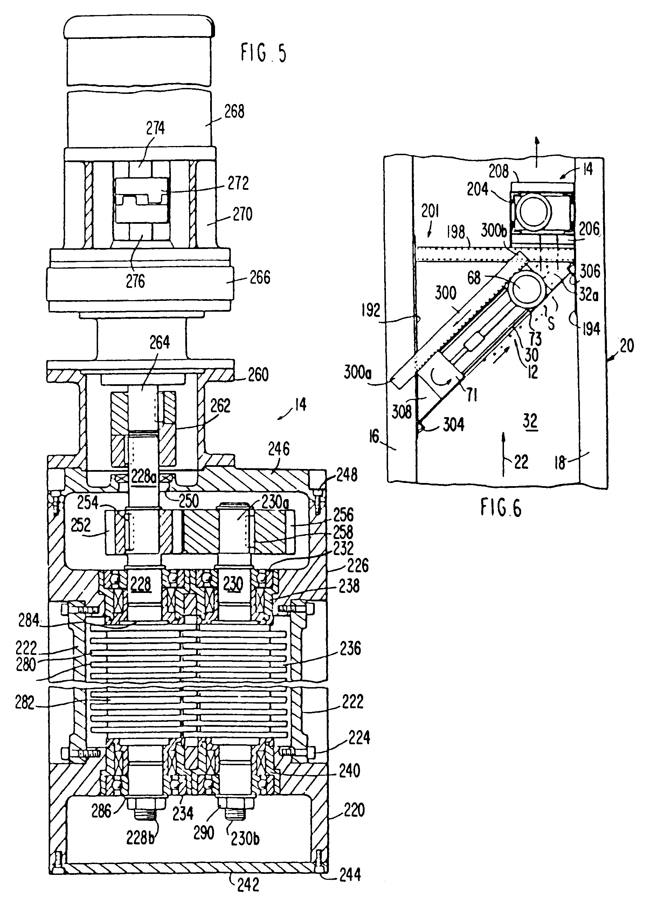

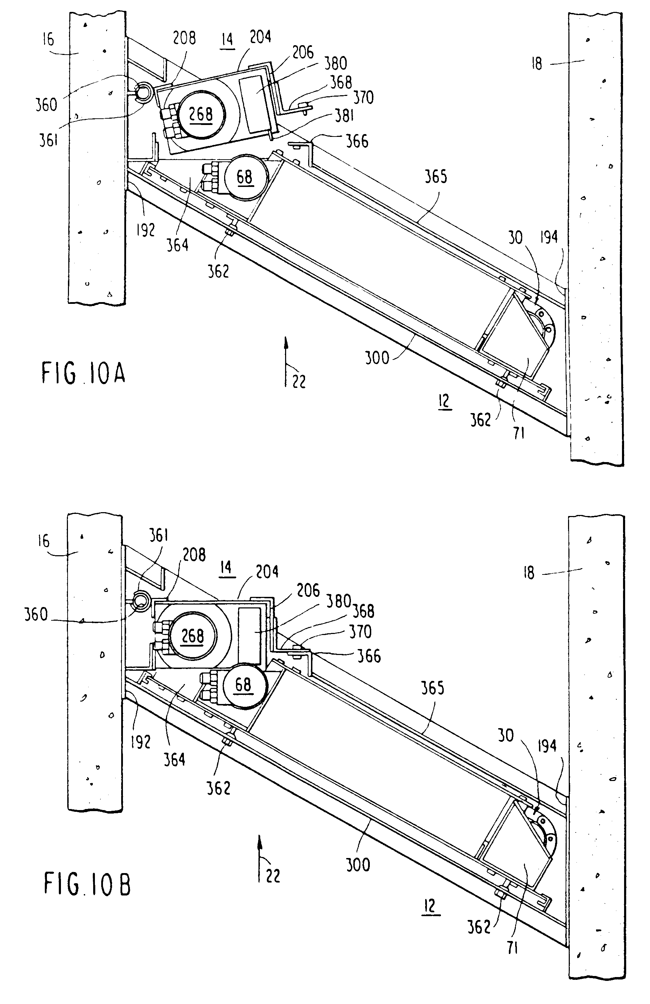

Figures 6, 7 and 8 show other comparative embodiments and Figures 9 and 10 show embodiments of the invention. In these embodiments, like numerals are employed for like elements.

In referring to Figure 6, the chute or spillway 20 which consists of laterally spaced walls 16, 18 is somewhat narrower than the spillway 20 of the embodiment of Figure 1. In order for proper acceleration of the influent stream 22 to the end of the screen unit 12, proximate to sidewall 18 but spaced from that sidewall so as to create a narrow channel portion 32a, the screen unit 12 must be angled and positioned other than perpendicular to the influent stream 22. In this case, She transverse frame support member or channel bar 198 is maintained at the same position extending between plates 192 and 194 fixed to respective sidewalls 16, 18 and the method of fixedly mounting the grinder unit 14 by way of angle bars 206, 208, and vertical plates 204, 194, etc. is identical to the embodiment of Figure 1.

A change is effected by means of an oblique angle bar 300 which is fixedly mounted with one end 300a overlying the top of the sidewall 16, while its opposite end 300b overlies the top of transverse channel bar 198 and which may be welded, screwed, bolted or otherwise fixed at respective ends to these members. The open frame assembly 190' of this embodiment is completed by a metal bar or strip 302 which is fixed to the opposite side of screen unit 14 at respective end housings 71, 73 and which extends beyond these housings. Brackets 304, 306 may be welded or otherwise fixed to plates 292, 294 and strip 302 may be suitably fixed at its opposite ends to brackets 304, 306 by being integrated to the brackets during manufacture, or welded, bolted, etc. at its ends thereto. Further, it should be kept in mind that, while open frame assembly indicated generally at 190' defined by frame members 198, 300 and 302 is effected above the level of the solids influent stream 22 and defines between parallel bars 300, 302, a slot 308 within which the screen unit 12 is positioned, similar open frame support members may be positioned within the bottom of the chute or spillway 20 to facilitate fixed positioning of the lower end of the screen unit 12. Open frame support members at the bottom of the chute or spillway 20 would correspond to that illustrated in Figures 1 and 6 for reception and locking of a lower end of the grinder unit 14 as a mirror image of those employed by frame assembly 190', in fixing the upper end of grinder unit 14. The same is true for the other embodiments herein.

In the embodiment of Figure 6, with the angulation of the screen unit 12, the downstream, left corner of the screen unit 14 abuts the surface of plate 192 (or the inside surface of sidewall 16 of the chute 20), so that some influent 22 flow is diverted, which must pass through the horizontal, rotating endless screen 30 of unit 12 with the solids S larger than the mesh size of screen 30 carried by the diverted influent along the surface of the screen. The solids S are swept by the accelerating portion of influent stream 22, when it passes through the narrow channel portion 32a leading to the inlet port of grinder unit 14.

In Figure 7, the chute or spillway 20' divides into three, parallel outlet passages or channels 402, 404 and 406, with the solids influent stream 22 expanded by diverging sidewalls 16', 18' of chute 20'. A pair of separators 408, 410 define further vertical sidewalls 412, 414, 416 and 418 creating, with sidewalls 16' and 18', the respective outlet channels 402, 404 and 406. The waste treatment system of this embodiment utilizes two screen units 12, 12 which are fixed to the diverging chute walls 16', 18' and which extend at right angles thereto having ends at 12a which are separated from each other forming a narrow channel portion 32a' therebetween through which portion, the solids S influent stream 22 pass at accelerated velocity leading to the upstream inlet ports 221 of a pair of side by side grinder units 14, 14 which occupy the lateral width of the central outlet channel 404. In this embodiment, L-shaped frame members such as channel bars or angle bars 206' and 208' have ends fixed to respective sidewalls 414, 416, and define a narrow slot within which the two grinder units 14 are positioned side by side. In Figure 7, the open frame support assemblies near the top of the chute 20' are not illustrated for mounting screen units 12, but are preferably employed for fixing the position of screen units 12, 12 which span the full gap between the spacers 408, 410 and the respective sidewalls 16', 18' of chute 20'. In this case, the effluent streams 420 passing through outlet passages 402, 406 are free of solids S, while finely ground solids S are discharged from grinder units 14, 14 for passage through the center outlet channel 404 of the waste treatment system as part of effluent stream 422.

Depending upon the capacity of the grinder unit 14, and the lateral width of the channel through which the solids influent stream 22 passes, a number of stacked horizontal, rotary screen units may be employed in tandem, successively offset downstream, with the solids S larger than mesh size of the endless screens 30 of each screen unit 12 being swept along the upstream screen unit to the succeeding downstream screen unit and finally flow diverted by the accelerating influent stream through a narrow channel portion 32a between the most downstream screen unit 12 and the adjacent chute sidewall, into the inlet port 221 of the further offset, downstream grinder unit 14, as seen in the embodiment of Figure 8.

In this embodiment, the chute 20'' has its sidewalls 16, 18 separated by a distance which is in excess of the overall length of three screen units 12 when positioned in end overlapping, downstream offset stacked position with respect to the flow of the influent stream 22 and at right angles to flow direction. The direction of rotation of the drive motors 122 for the screen units 12, are such as to cause screens 30 to rotate in the same counterclockwise direction, Figure 8. Thus, the solids S in particle form, are swept by the diverted portion of influent stream 22 away from the ends 30a of the rotating screens 30 to move towards the upstream face of the endless screen 30 of each succeeding unit from right to left, Figure 8, and with a final concentration of the solids S within that diverted portion of the influent stream 22, within channel portion 32a leading directly to the inlet port 221 of the single grinder unit 14. Grinder unit 14 has one end fixed to wall 16 and the other end underlies the end of most downstream screen unit 12 of the assembly. Again, in Figure 8, the representation is one which is schematic, and the open frame support assembly for supporting the various screen units 12 and grinder units 14 is purposely not shown, but consists of appropriate frame members formed by metal channel bars or the like, and is constructed so that various shaped channel bars are preferably fixed at respective ends to the opposing sidewalls of chute 20'. The direction of screen rotation is indicated by arrows 500.

Figure 9 illustrates a preferred embodiment of the invention. This embodiment is a modification of Figure 6. In Figure 9 screen 12 is angled relative to the grinder unit 14. An internal flow deflector 350 is placed intermediate the screen elements and held in place by, for example, channel bar not illustrated. The flow deflector is positioned so that the influent flow, illustrated by arrows 352 is deflected passing through the upstream face of the screen 30. Thus, as illustrated in Figure 9, the downstream face of the screen, which is contiguous to the grinder unit 14, has waste materials released urged in part by the fluid flow itself. The screen 30 is positioned very close to the cutter 230, typically with about 0.32cm (1/8") clearance therebetween. Waste materials urged to the outer face by the fluid flow from the diverter are picked off the surface by the cutter 230 which rotates at a higher speed than the screen. This technique results in a self cleaning of the screen assembly 30 without the use of conventionally employed doctor blades. Doctor blades while conventional cleaning elements are reality a detriment. This is because they clog and need to be cleared.

To further improve the fluid flow, vertical and horizontal plates may be used to direct and increase the velocity of the internal flow through the radius of the drive sprocket 56 as the screen turns around at that point. This promotes additional cleaning of the screen to remove any material which tends to become entangled in the screen elements themself. Consequently, as illustrated in Figure 9, the exit point for any debris which tends to remain trapped on the screen is contiguous to that of the cutter elements 228, 230. The redirected accelerated flow illustrated by the arrows 352 thus exit at a point directly upstream of the cutting chamber of the grinding unit for directing entrained waste directly to the cutter element 230.

In order to accomplish this spacing of the embodiment of Figure 9 as compared to that of Figure 6, modifications of the end housing of the screen assembly are required. Such is illustrated in Figures 10A and 10B which illustrate various positions of the system. As illustrated in Figures 10A and 10B, the screen 12 is mounted relative to sidewalls 16 and 18 and angled relative to the stream 22. The requirement in the previous embodiment for a transverse frame support member is eliminated. The unit is held in position on the wall 16 by means of plate 192 and on wall 18 by means of plate 194. Attached to plates 192 and 194 by an angle bar 300 to which cover 71 is affixed by a means of a series of bolts 362 and the like. The end housing 71 is not square as in the case of the Figure 6 embodiment rather is cut in a trapezoidal form. At the end of the screen assembly adjacent to the cutter element 14, a trapezoidal end housing 364 is used to position the motor 68 onto the frame element. On the downstream side a bar or strip 365 has a bracket 366.

The cutter assembly 14 in its housing comprising vertical plates 204 with angle bars 206 and 208 is pivoted about a pivot rod 360. Figure 10A illustrates the assembly in an open position. An angle bar 368 carries with it a locking member 370 which engages, as illustrated in Figure 10B a corresponding portion on bracket 366 to lock the assembly in place. Locking and adjustment element 370 may be adjustable bolts, keys or the like.

The purpose of the bolt 370 is to permit spacing between the screen 30 and cutter assembly 14 to be adjusted. That is by tightening the bolt to bracket the cutter housing rotates clockwise as viewed in Figure 10A to decrease the distance to the screen. Given this ability to position the cutter element relative to the screen, the system may be "tuned" to different flows. It is particularly important for low velocity flows.

An important advantage of the embodiment of Figure 10A is that the grinder assembly 14 can be lifted or lowered to or from the channel on the pivot shaft 360. That is, the housing is fixed to a sleeve member 361 which is concentric to shaft 360. The unit 14 is then simply lowered over shaft 360 on concentric member 361 to allow the grinder unit to be lowered into position yet still somewhat remote from the channel screen element 12. The ability to lift and remove the grinder unit without disassembling either the screen assembly or the installation elements provides an important advantage of the embodiment of Figures 9 and 10. While not illustrated, the shaft 360 may be keyed to prevent lifting of the housing without first rotating a slot on the sleeve 361 into alignment at a position rotated away from the screen unit 12.

Another important advantage of the embodiments of Figures 9 and 10 is that it permits operation in either left-handed or right-handed assembled systems. The system of Figure 6 while angled to the affluent flow works only in one direction. However, the embodiment of Figures 9 and 10 given the nature of positioning of the cutter relative to the end of the screen allows the cutter assembly is to be placed either to the right or the left of the screen assembly.

Yet another advantage of the embodiment illustrated in Figures 10A and 10B is the ability to pivot the grinder unit away from the screen assembly for purposes of maintenance and cleaning. The closed assembly as illustrated in Figure 10B in which like numerals are used to designate identical components.

As illustrated in Figure 10B, the grinder unit has been rotated into a locked position. There is an overlap between the housing for the grinder unit 14 and that holding the motor 68 for the screen assembly. As illustrated in Figure 10B, this overlap places the cutting elements directly and closely in position relative to the point of rotation of the screen 30. A typical spacing is 0.32cm (1/8"). This close relationship provides a more active interface between the screen 30 and the grinder unit by decreasing the dead space between those two elements. The system is thus not sensitive to flow rates in the channel. Those rates cannot be substantially altered. This is a particular improvement in low velocity flow applications since it maintains a relatively constant pressure through the system without any drop which would occur in such dead space. This improvement occurs in part due to the elimination of the doctor blade which is typically positioned between the screen and grinder element. By the use of the internal deflector 350, this doctor blade element is eliminated.

As illustrated in Figures 9 and 10B, given the positioning, the screen radial path is maintained tangentially closer to the cutter diameter. The screen thus rotates very close to one stack of the cutter element 14. The rotation of that cutter element is counter rotational to that of the screen as illustrated in Figure 9. That is, cutter element 230 rotates in a direction opposite to that of screen 30 which provides for rapid transfer of any debris off the screen via the deflected flow into the proximity of the cutters. With the decreased spacing between the screen and the cutters, improved flow through the system is obtained. This is because the screen literally projects into the cutting chamber.

The grinder unit 14 has a side rail illustrated schematically as element 380. Those flow rails enhance fluid flow through the cutter elements. In accordance with this invention, a strip of UHMW material such as teflon or the like, illustrated by element 381 is placed contiguous to the side rail 380. This wear strip engages the outside of the screen 30 to create a tension between the screen and the sprockets on the drive shaft for the screen assembly. That is, the wear strip 381 tends to act as a "derailleur" providing tension on the screen 30 to prevent sprocket jump.

From the above description it may be seen that a very active waste handling system is developed on the basis of an assembly of at least one screen unit and at least one grinder unit with the horizontal rotating screen continuously diverting solids from the waste stream directly into the grinder unit with both units being easily installed having motors above the influent stream and dropped into position within a chute carrying the influent stream carrying the solids by dropping the units in place within a open frame support assembly. The vertically oriented grinder unit or units grind solids into uniformly small particles minimizing damage to pumps and other processing equipment. The screen unit, like the grinder unit, is of simple design, rugged construction with few moving parts thereby minimizing maintenance and repair cost as well as down time. The horizontal rotating screen is self-cleaning using the accelerated diverted portion of the influent stream to wash the captured solids particles off. the upstream face and accelerate the flow thereof and concentration into the inlet port of the grinder unit. Further, the close mesh of the screen keeps all unwanted particles that could cause downstream clogging problems.

As may be appreciated, simple modifications may be made to permit the screen units 12 and the grinder units 14 to operate fully submersed in the influent stream. The electric drive motors may be of the hermetic type with appropriate sealed electric cables, alternatively, hydraulic drives may be employed for submersible application using hydraulically driven rotary motors for rotating the drive shafts of respective units. Depending upon the size and mass of the solids, some solids may actually contact the screen 30, however, the solids tend to follow the laminar flow caused by the screen moving towards the grinder unit rather than impacting on the screen. As may be appreciated, while a screen of particular construction is disclosed in detail, open mesh screens in the form of endless loops appropriately sized may replace the screen made up of sections and principally of molded plastic links, without departing from the scope of the invention. Further, tracking discs may be added to drive shaft 54 to prevent the screen from mis-tracking, and while baffle plates have been provided between the downstream of said grinder unit or units and the upstream screen units at the end adjacent to the grinder units to prevent damage to the screen from objects being kicked back from a reversing grinder unit during reverse operation and to eliminate dead spots where solids can collect, the particular bafflet plates are exemplary only of one type of baffling to facilitate the feed of solids entrained within the influent stream into the upstream inlet fort of the grinder unit and different screens may be employed for utilizing one or more-vertically upright baffle plate to perform that function.

## Claims

1. A waste handling system for screening and grinding solids entrained in an influent liquid stream flowing within a flow confining chute (20), comprising a solid waste grinder unit (14); a solids diverter horizontal rotating screen unit (R) fixedly mounted within the chute, said screen unit (12) comprising a rigid fixed frame assembly (64), a screen (30) mounted for rotation on said frame assembly such that one face of the screen may be positioned for movement horizontally across the stream and facing upstream thereof, and means mounted on the rigid frame assembly for rotating said screen thereby diverting a portion of the stream flow in the direction of screen movement (66) to cause solid waste of the influent stream larger than openings (40) in the screen to be entrained in influent diverted along said one upstream face and to be carried thereby in the direction of screen movement (60) such that the solid waste is driven to the grinder unit (14) and finely ground prior to discharge from the grinder unit, characterized in that the system further comprises a flow deflector (350) positioned inside the screen unit (12) relative to the means for rotating the screen (30), the flow deflector diverting fluid flow from a back inside of the screen (30) through the screen to dislodge materials on an outside of the screen toward the grinder unit (14).

2. A waste handling system according to claim 1, wherein the screen unit (12) comprises an elongated rigid open frame (64) on which is mounted an endless loop open mesh screen (30) such that one face of the screen may be positioned vertically for movement horizontally across the stream.

3. A system according to claim 2, wherein the screen unit open frame assembly (64) of the solids diverter horizontal rotating screen unit (12) comprises left and right, vertically spaced upper and lower end housings (70;71;72;73), vertically oriented drive and driven shafts (54;52) mounted for rotation about their axes at opposite ends within respective upper and lower end housings, a plurality of sprockets (50) fixedly mounted to the shafts (52;54) for rotation about their axes at axially spaced positions along the shafts, the sprockets including radially projecting teeth (56), the drive shaft (54) and the sprockets mounted thereto defining a drive shaft sprocket assembly and the driven shaft (52) and the sprockets mounted thereto defining a driven shaft sprocket assembly, and wherein the endless loop open mesh screen (30) comprises linked screen sections (34), each screen section being formed of a plurality of horizontal, vertically overlapping links (36), spaced vertical riser strips (38) integral with the links to define with-the links, rectangular screen mesh openings (40).

4. A system according to claim 3, wherein the sprocket teeth (56) of the solids diverter horizontal rotating screen unit have concave grooves (60) within one side of the teeth facing in the same circumferential direction, and wherein the sprockets fixed to the drive shaft (54) have teeth facing oppositely to those fixed to the driven shaft (52), whereby one of the shafts functions as a drive shaft and the other as an idler.

5. A solid waste handling system according to claim 2, wherein the screen unit open frame assembly (64) comprises left and right, vertically spaced, upper and lower end housings (70;71;72;73), vertically oriented drive and driven shafts (54;52) mounted for rotation about their axes at opposite ends within respective upper and lower end housings, a plurality of sprockets (50) fixedly mounted to the drive shaft (54) for rotation about their axes at axially spaced positions along the drive shaft (54), idler means carried by the driven shaft (52), the drive shaft (54) and sprockets mounted thereto defining a drive shaft assembly, the driven shaft (52) and the idler means mounted thereto defining a driven shaft idler assembly, and wherein the endless loop open mesh screen (30) is looped about respective drive shaft and driven shaft assembly.

6. A solid waste handling system according to claim 5, wherein the screen unit open frame assembly (64) includes an upper tensioner (76) operatively coupled between the upper end housings (70;72) for the drive shaft and driven shaft assemblies and a lower tensioner (74) operatively coupling the lower end housings (71;73) for the drive shaft and driven shaft assemblies to effect selective adjustment of the tension of the endless loop screen (30) rotatably mounted on drive shaft and driven shaft assemblies.

7. A solid waste handling system according to claim 5 or claim 6, further comprising a plurality of vertically spaced supports (94) fixedly mounted between the drive shaft (54) and the driven shaft (52) on the downstream side of the upstream length of screen for supporting the front half of the endless loop screen (30) during traverse across the influent stream.

8. A solid waste handling system according to claim 2, wherein the open frame comprises a transverse metal frame member (198) extending laterally between opposed sidewalls (16,18) of the chute (20), and a pair of oblique, parallel metal frame members (300,302) extending obliquely to the direction of flow of the influent stream through the flow channel defined by the chute, having upstream ends fixedly mounted to the one sidewall (16) and extending towards the other sidewall (18), the downstreammost one of the oblique frame members (300) has an end (300b) intersecting the transverse frame member and fixedly mounted thereto, and wherein the length of the oblique frame members and the slot formed therebetween is in excess of the length of the screen unit, and wherein the screen unit (12) is positioned between the oblique frame members with an upstream end in contact with the one sidewall (16) and a downstream end spaced from the other sidewall (18) of the chute (20) so as to define, with the other sidewall (16) a narrow portion of the channel, and wherein the grinder unit (14) is fixedly mounted downstream of and offset from the transverse open frame member by a pair of short length open support frame angle bars with the inlet port (221) thereof in the path of flow of the solids entrained within the diverted influent stream portion at the downstream end of the oblique screen unit.

9. A solid waste handling system according to claim 8, wherein the chute laterally spaced sidewalls (16,18) diverge in a downstream direction and the chute (20) includes a pair of separators (410,408) defining with the diverging chute sidewalls (16',18'), three, laterally spaced, parallel outlet channels (402,404,406), wherein the at least one screen unit (12) comprises two screen units having first ends, respectively fixedly mounted to the diverging portions of the chute sidewalls (16,18) and having opposite, second ends (12a) abutting respective laterally spaced separators (408,410) and defining the narrow channel portion (32a) between the second ends of the screen units, and wherein the driving means (68) for the horizontal rotating screens rotate in directions such that the upstream faces of the screens move in opposite directions towards each other, and wherein at least one grinder unit (14) is fixedly mounted between the separators downstream of the screen units (12) and in line with the narrow channel portion with the grinder unit housing inlet port (221) facing the narrow channel portion, whereby portions of the influent stream devoid of solids pass through the outlet channels between the separators and respective sidewalls (16,18) of the chute (20), and wherein ground solids are discharged from the at least one grinder unit outlet port (221) for discharge from the outlet channel between the laterally spaced separators.

10. A solid waste handling system according to claim 8, wherein the at least one screen unit (12) comprises a plurality of screen units forming an end overlapping stacked array extending transversely across the chute (20) between the sidewalls from one sidewall (16) towards the other (18), wherein the end of each succeeding screen unit (12) in the downstream direction within the stacked array has its end remote from the one sidewall (16) overlapping the end of the immediately adjacent screen unit proximate to the one sidewall (16), and wherein the screen units (12) have the endless screens (30) rotating such that the portions of the endless screens (30) facing upstream move in directions towards the other sidewall (18), and wherein the most downstream screen unit of the stacked array has its end proximate to the other sidewall (18) but spaced therefrom a short distance to form the narrow channel portion, and wherein the at least one grinder unit (14) is fixedly mounted to the other sidewall (18), offset downstream of the most downstream screen unit (12), closing off the narrow channel portion and having its inlet port (221) facing upstream to receive the diverted portion of the solids influent stream passing through the narrow channel portion and the solids concentrated therein as a result of operation of the multiple screen units (12).

11. A solid waste handling system according to any one of the preceding claims, wherein the screen unit open frame assembly (64) comprises left and right, vertically spaced, upper and lower end housings (70;71;72;73), vertically oriented drive and driven shafts (54;52) mounted for rotation about their axes at opposite ends within respective upper and lower end housings, a plurality of sprockets (50) fixedly mounted to the shafts for rotation about their axes at axially spaced positions along the shafts, the drive shaft (54) and the sprockets mounted thereto defining a drive shaft sprocket assembly and the driven shaft (52) and the sprockets mounted thereto defining a driven shaft sprocket assembly, the sprockets (50) including radially projecting teeth (56), and wherein the endless loop open mesh screen (30) comprises linked screen sections (34), each screen section being formed of a plurality of horizontal, vertically spaced links (36) having enlarged headed ends (36a), horizontally spaced vertical riser strips (38) integral with the links to define with the links, rectangular screen mesh openings (40), and wherein the headed ends of the horizontal links of adjacent screen sections have axial holes and the headed ends (36a) are interposed with each other with the holes (44) thereof aligned and rods (42) projecting through the aligned holes and pivotably coupling the links together at the headed ends such that the pivotably coupled screen sections (34) wrap about the drive shaft and driven shaft sprocket assemblies at respective ends of the screen units with the headed ends (36a) of the links engaging the sprocket teeth (56).

12. A solid waste handling system according to any preceding claim, wherein the rigid solids diverter and the screen unit (12) are mounted in the flow channel (20) at an angle to the stream and the solid waste grinder (14) is mounted within the flow at a position adjacent to and overlapping one end of the loop screen (30).

13. A solid waste handling system according to any one of the preceding claims, wherein the screen comprises links (36) having a tapered outer face.

14. A solid waste handling system according to any one of the preceding claims further comprising means to rotate the solid waste grinder (14) relative to the screen unit (12).

15. A solid waste handling system according to claim 14, wherein the means to rotate comprises a shaft (360) mounted on the bottom wall, a housing for the grinder unit (14) and a coupling (361) on the housing slidably mounted on the shaft.

16. A solid waste handling system according to claim 14 or claim 15 further comprising means mounted to the housing to bias the screen into contact with the means for rotating the screen (30).

## Patentansprüche

1. Abproduktbehandlungssystem zum Sieben und Zerkleinern von Feststoffen, die in einem zulaufenden Flüssigkeitsstrom mitgeführt werden, der in einer Strömungsbegrenzungsrinne (20) strömt, wobei das System folgendes aufweist: eine Zerkleinerungseinheit (14) für feste Abfallstoffe; eine Feststoffe umlenkende horizontale umlaufende Siebeinheit (R), die in der Rinne fest angebracht ist, wobei die Siebeinheit (12) folgendes aufweist: eine steife festgelegte Rahmenanordnung (64), ein Sieb (30), das an der Rahmenanordnung drehbar so angebracht ist, daß eine Arbeitsfläche des Siebs positionierbar ist, um horizontal quer über der Strömung und zu deren Aufstromseite weisend bewegt zu werden, und eine Einrichtung, die an der steifen Rahmenanordnung angebracht ist, um das Sieb zu drehen und dadurch einen Teil des strömenden Durchflusses in der Richtung der Siebbewegung (66) umzulenken, um zu bewirken, daß feste Abfallstoffe des zulaufenden Stroms, die größer als Öffnungen (40) in dem Sieb sind, in einem Zulauf mitgeführt werden, der entlang der einen aufstromseitigen Arbeitsfläche umgelenkt wird, und davon in der Richtung der Siebbewegung (60) mitgenommen werden, so daß die festen Abfallstoffe zu der Zerkleinerungseinheit (14) getrieben und feinzerkleinert werden, bevor sie aus der Zerkleinerungseinheit austreten, dadurch gekennzeichnet, daß das System ferner ein Strömungs-Ablenkelement (350) aufweist, das im Inneren der Siebeinheit (12) relativ zu der Einrichtung zum Drehen des Siebs (30) positioniert ist, wobei das Strömungs-Ablenkelement die Fluidströmung von einer rückwärtigen Innenseite des Siebs (30) durch das Sieb umlenkt, um an einer Außenseite des Siebs befindliche Materialien in Richtung zu der Zerkleinerungseinheit (14) abzulösen.

2. Abproduktbehandlungssystem nach Anspruch 1, wobei die Siebeinheit (12) einen langgestreckten steifen offenen Rahmen (64) aufweist, an dem ein grobmaschiges Endlosschleifen-Sieb (30) so angebracht ist, daß eine Arbeitsfläche des Siebs für eine Bewegung horizontal über die Strömung vertikal positioniert werden kann.

3. System nach Anspruch 2, wobei die offene Siebeinheit-Rahmenanordnung (64) der Feststoffe umlenkenden horizontalen umlaufenden Siebeinheit (12) folgendes aufweist: linke und rechte, in Vertikalrichtung beabstandete obere und untere Endgehäuse (70; 71; 72; 73), eine vertikal orientierte treibende und eine vertikal orientierte angetriebene Welle (54; 52), die um ihre Achsen drehbar an entgegengesetzten Enden in jeweiligen oberen und unteren Endgehäusen angebracht sind, eine Vielzahl von Kettenrädern (50), die auf den Wellen (52; 54) um ihre Achsen drehbar an in Axialrichtung beabstandeten Positionen entlang den Wellen fest angebracht sind, wobei die Kettenräder radial vorspringende Zähne (56) haben, die treibende Welle (54) und die daran angebrachten Kettenräder eine treibende Wellen-Kettenrad-Anordnung definieren und die angetriebene Welle (52) und die daran angebrachten Kettenräder eine angetriebene Wellen-Kettenrad-Anordnung definieren, und wobei das grobmaschige Endlosschleifen-Sieb (30) miteinander gekoppelte Siebabschnitte (34) aufweist, wobei jeder Siebabschnitt aus einer Vielzahl von horizontalen, in Vertikalrichtung überlappten Gliedern (36) gebildet ist und wobei voneinander beabstandete vertikale Hebestreifen (38), die mit den Gliedern integral sind, gemeinsam mit den Gliedern viereckige Siebmaschenöffnungen (40) definieren.

4. System nach Anspruch 3, wobei die Kettenradzähne (56) der Feststoffe umlenkenden horizontalen umlaufenden Siebeinheit konkave Nuten (60) in einer Seite der Zähne, die in dieselbe Umfangsrichtung weisen, haben, und wobei die auf der treibenden Welle (54) festgelegten Kettenräder Zähne haben, die entgegengesetzt zu denjenigen weisen, die auf der angetriebenen Welle (52) festgelegt sind, so daß eine der Wellen als eine Antriebswelle und die andere als eine Mitläuferwelle wirksam ist.

5. Behandlungssystem für feste Abprodukte nach Anspruch 2, wobei die offene Siebeinheit-Rahmenanordnung (64) folgendes aufweist: linke und rechte, in Vertikalrichtung beabstandete obere und untere Endgehäuse (70; 71; 72; 73), eine vertikal orientierte treibende und eine vertikal orientierte angetriebene Welle (54; 52), die um ihre Achsen drehbar an entgegengesetzten Enden in jeweiligen oberen und unteren Endgehäusen angebracht sind, eine Vielzahl von Kettenrädern (50), die auf der treibenden Welle (54) um ihre Achsen drehbar an in Axialrichtung beabstandeten Position entlang der treibenden Welle (54) fest angebracht sind, mitlaufende Einrichtungen, die von der angetriebenen Welle (52) getragen werden, wobei die treibende Welle (54) und daran angebrachte Kettenräder eine Antriebswellenanordnung definieren, die angetriebene Welle (52) und die daran angegebrachten mitlaufenden Einrichtungen eine angetriebene Mitläuferwellenanordnung definieren, und wobei das grobmaschine Endlosschleifen-Sieb (30) um die jeweilige Antriebswellenanordnung und angetriebene Wellenanordnung herumgeführt ist.

6. Behandlungssystem für feste Abprodukte nach Anspruch 5, wobei die offene Rahmenanordnung (64) der Siebeinheit aufweist: eine obere Spanneinrichtung (76), die betriebsmäßig zwischen die oberen Endgehäuse (70; 72) für die Antriebswellenanordnung und die angetriebene Wellenanordnung gekoppelt ist, und eine untere Spanneinrichtung (74), die betriebsmäßig die unteren Endgehäuse (71; 73) für die Antriebswellenanordnung und die angetriebene Wellenanordnung miteinander verbindet, um eine selektive Justierung der Spannung des Endlosschleifen-Siebs (30), das an der Antriebswellenanordnung und der angetriebenen Wellenanordnung drehbar angebracht ist, zu bewirken.

7. Behandlungssystem für feste Abprodukte nach Anspruch 5 oder Anspruch 6, das ferner eine Vielzahl von in Vertikalrichtung berabstandeten Abstützungen (94) aufweist, die zwischen der Antriebswelle (54) und der angetriebenen Welle (52) an der Abstromseite der aufstromseitigen Sieblänge fest angebracht sind, um die vordere Hälfte des Endlosschleifen-Siebs (30) während der Queranordnung über dem zulaufenden Strom abzustützen.

8. Behandlungssystem für feste Abprodukte nach Anspruch 2, wobei der offene Rahmen aufweist: ein metallisches Querrahmenelement (198), das sich quer zwischen gegenüberstehenden Seitenwänden (16, 18) der Rinne (20) erstreckt, und ein Paar von schrägen, parallelen metallischen Rahmenelementen (300, 302), die sich schräg zu der Strömungsrichtung des zulaufenden Stroms durch den von der Rinne definierten Strömungskanal erstrecken und die aufstromseitige Enden haben, die an der einen Seitenwand (16) fest angebracht sind und sich zu der anderen Seitenwand (18) erstrecken, wobei das am weitesten abstromseitige der schrägen Rahmenelemente (300) ein Ende (300b) hat, das das Querrahmenelement kreuzt und daran fest angebracht ist, und wobei die Länge der schrägen Rahmenelemente und der zwischen ihnen gebildete Schlitz größer als die Länge der Siebeinheit ist, und wobei die Siebeinheit (12) zwischen den schrägen Rahmenelementen so positioniert ist, daß ein aufstromseitiges Ende in Berührung mit der einen Seitenwand (16) und ein abstromseitiges Ende von der anderen Seitenwand (18) der Rinne (20) beabstandet ist, so daß gemeinsam mit der anderen Seitenwand (16) ein enger Bereich des Kanals definiert ist, und wobei die Zerkleinerungseinheit (14) abstromseitig von dem Querelement des offenen Rahmens fest angeordnet und dazu versetzt ist mittels eines Paars von kurzen Eckschienen des offenen Stützrahmens, wobei ihre Einlauföffnung (221) in der Strömungsbahn der Feststoffe ist, die in dem umgelenkten Zulaufstrombereich am abstromseitigen Ende der schrägen Siebeinheit mitgeführt werden.

9. Behandlungssystem für feste Abprodukte nach Anspruch 8, wobei die in Querrichtung beabstandeten Seitenwände (16, 18) der Rinne in einer Abstromrichtung divergieren und die Rinne (20) ein Paar von Separatorelementen (410, 408) aufweist, die gemeinsam mit den divergierenden Rinnen-Seitenwänden (16', 18') drei in Querrichtung beabstandete, parallele Auslaßkanäle (402, 404, 406) definieren, wobei die wenigstens eine Siebeinheit (12) zwei Siebeinheiten aufweist, die erste Enden, die jeweils an den divergierenden Bereichen der Rinnen-Seitenwände (16, 18) fest angebracht sind, und entgegengesetzte zweite Enden (12a) haben, die an jeweiligen in Querrichtung beabstandeten Separatorelementen (408, 410) anliegen und den engen Kanalbereich (32a) zwischen den zweiten Enden der Siebeinheiten definieren, und wobei die Antriebseinrichtung (68) für die horizontalen umlaufenden Siebe in solche Richtungen drehen, daß die aufstromseitigen Arbeitsflächen der Siebe sich in entgegengesetzten Richtungen zueinander bewegen, und wobei wenigstens eine Zerkleinerungseinheit (14) zwischen den Separatorelementen abstromseitig von den Siebeinheiten (12) und in einer Linie mit dem engen Kanalbereich fest angebracht ist, wobei die Zulauföffnung (221) des Gehäuses der Zerkleinerungseinheit dem engen Kanalbereich zugewandt ist, so daß Anteile der zulaufenden Strömung, die keine Feststoffe enthalten, durch die Auslaßkanäle zwischen den Separatorelementen und jeweiligen Seitenwänden (16, 18) der Rinne (20) strömen, und wobei zerkleinerte Feststoffe aus der wenigstens einen Zerkleinerungseinheit-Auslaßöffnung (221) abgegeben werden, um aus dem Auslaßkanal zwischen den in Querrichtung beabstandeten Separatorelementen ausgetragen zu werden.

10. Behandlungssystem für feste Abprodukte nach Anspruch 8, wobei die wenigstens eine Siebeinheit (12) eine Vielzahl von Siebeinheiten aufweist, die eine an den Enden überlappte Stapelanordnung bilden, die sich quer über die Rinne (20) zwischen den Seitenwänden von der einen Seitenwand (16) zu der anderen (18) erstrecken, wobei das Ende jeder folgenden Siebeinheit (12) in der Abstromrichtung innerhalb der Stapelanordnung sein Ende, das von der einen Seitenwand (16) entfernt ist, in Überlappung mit dem Ende der unmittelbar benachbarten Siebeinheit nahe der einen Seitenwand (16) hat, und wobei die Endlossiebe (30) der Siebeinheiten (12) so umlaufen, daß die Bereiche der Endlossiebe (30), die zur Aufstromseite weisen, sich in Richtungen zu der anderen Seitenwand (18) bewegen, und wobei die am weitesten abstromseitige Siebeinheit der Stapelanordnung ihr Ende nahe der anderen Seitenwand (18), jedoch davon um eine kurze Distanz beabstandet hat, um den engen Kanalbereich zu bilden, und wobei die wenigstens eine Zerkleinerungseinheit (14) an der anderen Seitenwand (18) fest angebracht ist, in Abstromrichtung der am weitesten abstromseitigen Siebeinheit (12) versetzt ist, den engen Kanalbereich verschließt und ihre Zulauföffnung (221) nach oben weisend hat, um den abgelenkten Anteil des zulaufenden Feststoffstroms, der durch den engen Kanalbereich fließt, und die Feststoffe, die darin als Ergebnis des Betriebs der Vielfach-Siebeinheiten (12) konzentriert sind, aufzunehmen.

11. Behandlungssystem für feste Abprodukte nach einem der vorhergehenden Ansprüche, wobei die offene Siebeinheit-Rahmenanordnung (64) folgendes aufweist: linke und rechte, in Vertikalrichtung beabstandete obere und untere Endgehäuse (70; 71; 72; 73), eine vertikal orientierte treibende und eine vertikal angeordnete angetriebene Welle (54; 52), die um ihre Achsen drehbar an entgegengesetzten Enden in jeweiligen oberen und unteren Endgehäusen angebracht sind, eine Vielzahl von Kettenrädern (50), die auf den Wellen um ihre Achsen drehbar an in Axialrichtung beabstandeten Positionen entlang den Wellen fest angebracht sind, wobei die Antriebswelle (54) und die daran angebrachten Kettenräder eine Antriebswellen-Kettenrad-Anordnung definieren und die getriebene Welle (52) und die daran angebrachten Kettenräder eine getriebene Wellen-Kettenrad-Anordnung definieren, wobei die Keettenräder (50) radial vorspringende Zähne (56) aufweisen, und wobei das grobmaschine Endlosschleifen-Sieb (30) miteinander gekoppelte Siebabschnitte (34) aufweist und jeder Siebabschnitt aus einer Vielzahl von horizontalen, in Vertikalrichtung beabstandeten Gliedern (36) mit vergrößerten Enden (36a) mit Kopf und in Horizontalrichtung beabstandeten vertikalen Hebestreifen (38) gebildet ist, die mit den Gliedern integral sind, um mit den Gliedern viereckige Siebmaschenöffnungen (40) zu definieren, und wobei die Köpfe aufweisenden Enden der horizontalen Glieder von benachbarten Siebabschnitten axiale Löcher haben und die Köpfe aufweisenden Enden (36a) zwischeneinander angeordnet sind, wobei ihre Löcher (44) ausgefluchtet sind und Bolzen (42) durch die ausgefluchteten Löcher ragen und die Glieder an ihren Köpfe aufweisenden Enden schwenkbar miteinander verbinden, so daß die schwenkbar gekoppelten Siebabschnitte (34) sich um die Antriebswellen-Kettenrad-Anordnung und die getriebene Wellen-Kettenrad-Anordnung an jeweiligen Enden der Siebeinheiten wickeln, wobei die Köpfe aufweisenden Enden (36a) der Glieder mit den Kettenradzähnen (56) in Eingriff sind.

12. Behandlungssystem für feste Abprodukte nach einem der vorhergehenden Ansprüche, wobei das steife Feststoff-Ablenkelement und die Siebeinheit (12) in dem Strömungskanal (20) unter einem Winkel zu der Strömung angebracht sind und die Zerkleinerungseinrichtung (14) für feste Abprodukte in der Strömungsbahn an einer Position angebracht ist, die einem Ende des Schleifensiebs (30) benachbart ist und dieses überlappt.

13. Behandlungssystem für feste Abprodukte nach einem der vorhergehenden Ansprüche, wobei das Sieb Glieder (36) mit einer sich verjüngenden äußeren Endfläche aufweist.

14. Behandlungssystem für feste Abprodukte nach einem der vorhergehenden Ansprüche, das ferner eine Einrichtung aufweist, um die Feststoff-Zerkleinerungseinheit (14) relativ zu der Siebeinheit (12) zu drehen.

15. Behandlungssystem für feste Abprodukte nach Anspruch 14, wobei die Einrichtung zum Drehen folgendes aufweist: eine Welle (360), die an der Bodenwand angebracht ist, ein Gehäuse für die Zerkleinerungseinheit (14) und eine Kupplung (361) an dem Gehäuse, die gleitbar auf der Welle angebracht ist.

16. Behandlungssystem für feste Abprodukte nach Anspruch 14 oder Anspruch 15, das ferner eine Einrichtung aufweist, die an dem Gehäuse angebracht ist, um das Sieb in Berührung mit der Einrichtung zum Drehen des Siebs (30) vorzuspannen.

## Revendications

1. Système de traitement de déchets pour tamiser et broyer des solides entraînés dans un écoulement de liquide affluent s'écoulant dans une goulotte de confinement d'écoulement (20), comprenant une unité de broyage de déchets solides (14) ; une unité de tamis rotatif horizontal de déflecteur de solide (12) montée fixement dans la goulotte, ladite unité de tamis (12) comprenant un assemblage de structure fixe rigide (64), un tamis (30) monté pour tourner sur ledit assemblage de structure de telle sorte qu'une face du tamis peut être positionnée pour se déplacer horizontalement à travers l'écoulement et faisant face vers l'amont de celui-ci, et des moyens montés sur l'assemblage de structure rigide pour faire tourner ledit tamis défléchissant ainsi une partie de l'écoulement dans la direction du mouvement du tamis (66) pour amener les déchets solides de l'écoulement affluent qui sont plus grands que les ouvertures (40) dans le tamis à être entraînés dans l'affluent défléchi le long de ladite face amont et à être portés de cette manière dans la direction de mouvement du tamis (60) de sorte que les déchets solides sont entraînés vers l'unité de broyage (14) et finement broyés avant d'être déchargés de l'unité de broyage, caractérisé en ce que le système comprend en outre un déflecteur d'écoulement (350) positionné dans l'unité de tamis (12) par rapport au moyen pour faire tourner le tamis (30), le déflecteur de courant déviant un écoulement de fluide à partir de l'arrière à l'intérieur du tamis (30) à travers le tamis pour déloger des matériaux sur l'extérieur du tamis en direction de l'unité de broyage (14).

2. Système de traitement de déchets selon la revendication 1, dans lequel l'unité de tamis (12) comprend une structure ouverte rigide allongée (64) sur laquelle est monté un tamis à maille ouverte en boucle sans fin (30) de telle sorte qu'une face du tamis peut être positionnée verticalement pour se déplacer horizontalement à travers l'écoulement.

3. Système selon la revendication 2, dans lequel l'assemblage de structure ouverte (64) de l'unité de tamis rotatif horizontal de déflecteur de solide (12) comprend des logements d'extrémité supérieurs et inférieurs gauches et droites espacés verticalement (70, 71, 72, 73), des arbres d'entraînement et entraîné orientés verticalement (54, 52) montés pour tourner autour de leurs axes à des extrémités opposées à l'intérieur des logements d'extrémité respectivement supérieurs et inférieurs, une pluralité de tambours dentés (50) montés fixement sur les arbres (52, 54) pour tourner autour de leurs axes en des positions espacées axialement le long des arbres, les tambours dentés comprenant des dents faisant saillie radialement (56), l'arbre d'entraînement (54) et les tambours dentés montés sur celui-ci définissant un assemblage de tambours dentés d'arbre d'entraînement et l'arbre entraîné (52) et les tambours dentés montés dessus définissant un assemblage de tambours dentés d'arbre entraîné, et dans lequel le tamis à maille ouverte en boucle sans fin (30) comprend des sections de tamis articulées (34) chaque section de tamis étant formée d'une pluralité d'articulations horizontales (36) se recouvrant verticalement, et de bandes d'élévation (38) verticales espacées réalisées d'une pièce avec les articulations pour définir avec les articulations des ouvertures de mailles de tamis rectangulaires (40).

4. Système selon la revendication 3, dans lequel les dents (56) de tambours dentés de l'unité de tamis rotatif horizontal de déflecteur de solide comportent des rainures concaves (60) dans un côté des dents faisant face à la même direction circonférentielle, et dans lequel les tambours dentés fixé sur l'arbre d'entraînement (54) ont des dents faisant face de manière opposée à celles fixées à l'arbre entraîné (52), de sorte que l'un des arbres fonctionne en tant qu'arbre d'entraînement, et l'autre en tant que tambour de tension.

5. Système de traitement de déchets solides selon la revendication 2, dans lequel l'assemblage de structure ouverte (64) de l'unité de tamis comprend des logements d'extrémité supérieurs et inférieurs gauches et droites espacés verticalement (70, 71, 72, 73), des arbres d'entraînement et entraîné (54, 52) orientés verticalement montés pour tourner autour de leurs axes en des extrémités opposées dans des logements d'extrémité respectivement supérieurs et inférieurs, une pluralité de tambours dentés (50) montés fixement sur l'arbre d'entraînement (54) pour tourner autour de leurs axes en des positions espacées axialement le long de l'arbre d'entraînement (54), des moyens de tambour de tension portés par l'arbre entraîné (52), l'arbre d'entraînement (54) et les tambours dentés montés dessus définissant un assemblage d'arbres d'entraînement, l'arbre entraîné (52) et les moyens de tambour de tension montés dessus définissant un assemblage de tambour de tension d'arbre entraîné, et dans lequel le tamis à maille ouverte en boucle sans fin (30) est disposé en boucle autour de l'assemblage d'arbre d'entraînement et d'arbre entraîné respectivement.

6. Système de traitement de déchets solides selon la revendication 5, dans lequel l'assemblage de structure ouverte (64) de l'unité de tamis comprend un dispositif de mise sous tension supérieur (76) couplé de manière opérationnelle entre les logements d'extrémité supérieurs (70, 72) pour les assemblages d'arbre d'entraînement et d'arbre entraîné, et un dispositif de mise sous tension inférieur (74) couplant de manière opérationnelle les logements d'extrémité inférieurs (71, 73) pour les assemblages d'arbre entraîné et d'arbre d'entraînement pour effectuer un ajustement sélectif de la tension du tamis en boucle sans fin (30) monté rotatif sur les assemblages d'arbre entraîné et d'arbre d'entraînement.

7. Système de traitement de déchets solides selon la revendication 5 ou la revendication 6, comprenant en outre une pluralité de supports espacés verticalement (94) montés fixement entre l'arbre d'entraînement (54) et l'arbre entraîné (52) sur le côté aval de la longueur amont du tamis pour supporter la moitié avant du tamis en boucle sans fin (30) pendant la traversée à travers l'écoulement affluent.

8. Système de traitement de déchets solides selon la revendication 2, dans lequel la structure ouverte comprend un élément de structure métallique transversal (198) s'étendant latéralement entre des parois latérales opposées (16, 18) de la goulotte (20) et une paire d'éléments de structure métallique parallèles obliques (300, 302) s'étendant obliquement à la direction de l'écoulement affluent à travers le canal d'écoulement définit par la goulotte, ayant des extrémités amont montées fixement sur une paroi latérale (16) et s'étendant en direction de l'autre paroi latérale (18), l'élément de structure oblique le plus en amont (300) a une extrémité (300b) coupant l'élément de structure transversal et montée fixement sur celui-ci, et dans lequel la longueur des éléments de structure obliques et la fente formée entre eux est supérieure à la longueur de l'unité de tamis, et dans lequel l'unité de tamis (12) est positionnée entre les éléments de structure obliques avec une extrémité amont en contact avec une paroi latérale (16) et une extrémité aval espacée de l'autre paroi latérale (18) de la goulotte (20) de telle manière à définir, avec l'autre paroi latérale (16) une partie étroite du canal, et dans lequel l'unité de broyage (14) est montée fixement en aval et décalée par rapport à l'élément de structure ouverte transversal par une paire de barres d'angle de structure de support ouverte de petite longueur avec le port d'entrée (221) de celui-ci dans le chemin d'écoulement des solides entraînés dans la partie d'écoulement affluent défléchi à l'extrémité aval de l'unité de tamis oblique.

9. Système de traitement de déchets solides selon la revendication 8, dans lequel les parois latérales (16, 18) espacées latéralement de la goulotte divergent dans une direction aval et la goulotte (20) comprend une paire de séparateurs (410, 408) définissant avec les parois latérales de goulotte divergente (16', 18') trois canaux de sortie parallèles espacés latéralement (402, 404, 406), dans lequel ladite au moins une unité de tamis (12) comprend deux unités de tamis ayant des premières extrémités, respectivement montées fixement sur les parties divergentes des parois latérales de goulotte (16, 18) et ayant des secondes extrémités opposées (12a) venant en butée contre des séparateurs espacés latéralement respectifs (408, 410) et définissant la partie de canal étroit (32a) entre les secondes extrémités des unités de tamis, et dans lequel les moyens d'entraînement (68) pour des tamis rotatifs horizontaux tournent dans des directions de telle sorte que les faces amont des tamis se déplacent dans des directions opposées les unes par rapport aux autres, et dans lequel au moins une unité de broyage (14) est montée fixement entre les séparateurs en aval des unités de tamis (12) et en ligne avec la partie de canal étroit, avec le port d'entrée de logement d'unité de broyage (221) faisant face à la partie de canal étroit, de sorte que des parties de l'écoulement affluent dépourvues de solides passent à travers les canaux de sortie entre les séparateurs et les parois latérales respectives (16, 18) de la goulotte (20), et dans lequel des solides broyés sont déchargés à partir du au moins un port de sortie d'unité de broyage (221) pour être déchargés à partir du canal de sortie entre les séparateurs espacés latéralement.

10. Système de traitement de déchets solides selon la revendication 8, dans lequel la au moins une unité de tamis (12) comprend une pluralité d'unités de tamis formant un réseau empilé se recouvrant aux extrémités s'étendant transversalement à travers la goulotte (20) entre les parois latérales à partir d'une paroi latérale (16) en direction de l'autre (18), dans lequel l'extrémité de chaque unité de tamis successive (12) dans la direction aval dans le réseau empilé a son extrémité éloignée de l'autre paroi latérale (16) recouvrant l'extrémité de l'unité de tamis immédiatement adjacente à proximité de la une paroi latérale (16), et dans lequel les unités de tamis (12) ont des tamis sans fin (30) tournant de telle sorte que les parties des tamis sans fin (30) tournés vers l'amont se déplacent en direction de l'autre paroi latérale (18), et dans lequel l'unité de tamis la plus en aval du réseau empilé à son extrémité à proximité de l'autre paroi latérale (18) mais espacée de celle-ci d'une courte distance pour former la partir de canal étroit, et dans lequel la au moins une unité de broyage (14) est montée fixement à l'autre paroi latérale (18), décalée en aval de l'unité de tamis la plus en aval (12), fermant la partie de canal étroit et ayant son port d'entrée (221) tourné vers l'amont pour recevoir la partie défléchie de l'écoulement affluent de solides passant à travers la partie de canal étroit et les solides concentrés là dedans en tant que résultat d'une opération de plusieurs unités de tamis (12).

11. Système de traitement de déchets solides selon l'une quelconque des revendications précédentes, dans lequel l'assemblage de structure ouverte (64) d'unité de tamis comprend des logements d'extrémité supérieurs et inférieurs gauches et droites espacés verticalement (70, 71, 72, 73), des arbres d'entraînement et entraîné (54, 52) orientés verticalement montés pour tourner autour de leurs axes à des extrémités opposées dans des logements respectivement supérieurs et inférieurs, une pluralité de tambours dentés (50) montés fixement sur les arbres pour tourner autour de leurs axes en des positions espacées axialement le long des arbres, l'arbre d'entraînement (54) et les tambours dentés montés dessus définissant un assemblage de tambours dentés d'arbre d'entraînement, et l'arbre entraîné (52) et les tambours dentés montés dessus définissant un assemblage de tambours dentés d'arbre entraîné, les tambours dentés (50) incluant des dents faisant saillie radialement (56), et dans lequel le tamis à maille ouverte en bouche sans fin (30) comprend des parties de tamis articulées (34), chaque partie de tamis étant formée d'une pluralité d'articulations horizontales espacées verticalement (36) ayant des extrémités de têtes agrandies (36a), des bandes d'élévation verticales espacées horizontalement (38) réalisées d'une pièce avec les articulations pour définir avec les articulations des ouvertures de maille de tamis rectangulaires (40), et dans lequel les extrémités de tête des articulations horizontales de sections de tamis adjacentes ont des trous axiaux et les extrémités de tête (36a) sont intercalées l'une avec l'autre avec les trous (44) de celles-ci alignés, et des tiges (42) faisant saillie à travers les trous alignés et couplant de manière pivotante les articulations ensemble aux extrémités de tête de telle sorte que les sections de tamis couplées de manière pivotante (34) entourent les assemblages de tambours dentés d'arbre d'entraînement et d'arbre entraîné à des extrémités respectives des unités de tamis avec les extrémités de tête (36a) des articulations venant en prise avec les dents (56) des tambours dentés.

12. Système de traitement de déchets solides selon l'une quelconque des revendications précédentes, dans lequel le déflecteur de solides rigide et l'unité de tamis (12) sont montés dans le canal d'écoulement (20) avec un angle par rapport à l'écoulement et le broyeur de déchets solides (14) est monté dans l'écoulement en une position adjacente à et recouvrant une extrémité du tamis en boucle (30).

13. Système de traitement de déchets solides selon l'une quelconque des revendications précédentes, dans lequel le tamis comprend des articulations (36) ayant des faces externes coniques.

14. Système de traitement de déchets solides selon l'une quelconque des revendications précédentes comprenant en outre des moyens pour faire tourner le broyeur de déchets solides (14) par rapport à l'unité de tamis (12).

15. Système de traitement de déchets solides selon la revendication 14, dans lequel les moyens pour faire tourner comprennent un arbre (360) monté sur la paroi de fond, un logement pour l'unité de broyage (14) et un couplage (361) sur le logement monté de manière coulissante sur l'arbre.

16. Système de traitement de déchets solides selon la revendication 14 ou la revendication 15 comprenant en outre des moyens montés dans le logement pour solliciter le tamis en contact avec les moyens pour faire tourner le tamis (30).
